Europäisches Patentamt

European Patent Office

Office européen des brevets

(19)

(11) Veröffentlichungsnummer: **0 069 921**
**B1**

(12) **EUROPÄISCHE PATENTSCHRIFT**

(45) Veröffentlichungstag der Patentschrift:
16.01.85

(51) Int. Cl.⁴: **B 60 P 1/64**, B 60 P 3/42

(21) Anmeldenummer: **82105851.8**

(22) Anmeldetag: **01.07.82**

(54) **Wechselrahmen für mit Containerverriegelungseinrichtungen versehene Container-Transportfahrzeuge, wie Lastkraftwagen, Anhänger oder gleisgebundene Container-Tragwagen.**

(30) Priorität: 14.07.81 DE 3127690
21.01.82 DE 3201657
08.06.82 DE 8216575 U
08.06.82 DE 3221550

(43) Veröffentlichungstag der Anmeldung:
19.01.83 Patentblatt 83/3

(45) Bekanntmachung des Hinweises auf die Patenterteilung:
16.01.85 Patentblatt 85/3

(84) Benannte Vertragsstaaten:
AT BE CH DE FR GB IT LI LU NL SE

(56) Entgegenhaltungen:
DE - U - 8 120 153
FR - A - 1 600 602
GB - A - 2 085 369
US - A - 4 095 838

(73) Patentinhaber: TCM-Transportmittel-Beratung und -Verkauf, Am Steinkreuz 25, D-2072 Bargteheide (DE)

(72) Erfinder: Müller, Claus H., Am Steinkreuz 25, D-2072 Bargteheide (DE)

(74) Vertreter: Richter, Joachim, Dipl.-Ing. et al, Patentanwälte Richter u.Werdermann Neuer Wall 10, D-2000 Hamburg 36 (DE)

## Beschreibung

Die Erfindung betrifft einen Wechselrahmen für mit Containerverriegelungseinrichtungen versehene Containertransportfahrzeuge, wie Lastkraftwagen, Anhänger, oder gleisgebundene Containertragwagen.

Für den Strassentransport von in den geometrischen Abmessungen genormten Standardcontainern werden bekannterweise Lastkraftwagen mit und ohne Anhänger verwendet, deren Fahrzeugrahmen mit standardisierten Beschlägen versehen sind, die mit an den Containern ausgebildeten Eckbeschlägen zur Befestigung der Container verbindbar sind. Bei diesen Transportsystemen besteht der Nachteil, dass die Fahrzeuge nur für den Transport von Containern geeignet sind. Bei Leerfahrten sind sie nicht wirtschaftlich einsetzbar, da eine Umrüstung der Fahrzeuge für eine andere Transportart als den Containertransport aus Kostengründen regelmässig unterbleiben muss. Aus der FR-A Nr. 1600602 ist es zwar bekannt, ein für Containerbetrieb ausgestattetes Fahrzeugchassis in eine Ladeplattform oder in einen geschlossenen Laderaum umzugestalten, jedoch ist es nachteilig, dass diese Möglichkeit auf das betreffende Fahrzeug beschränkt bleibt.

Die Erfindung löst die Aufgabe, einen Wechselrahmen zu schaffen, der es ermöglicht, an sich nur zum Containertransport bestimmte Fahrzeuge ohne Beeinträchtigung der Containertransportfähigkeit auch zum Transport anderer Güter einsetzen zu können, der nicht nur zur Aufnahme der Aufbauten von Lastkraftwagen oder Anhängern, wie Bordwände, Steckbretter, Planbäume, Rungen und Abdeckplanen, geeignet ist, sondern darüber hinaus so ausgebildet ist, dass eine mühelose Einsichtnahme des Innenraumes des Behälters z.B. bei Zollinspektionen od.dgl. möglich ist, ohne dass der Behälterinhalt entfernt werden muss.

Des weiteren ist es Aufgabe der Erfindung, einen boden- und obenseitig mit Containerverriegelungseinrichtungen versehenen Wechselrahmen für gleisgebundene Containertragwagen zu schaffen, der in seinem Innenraum die Planenaufbauten, wie Rungen, Plane, Bordwände (Niederbordwände), aufnehmen kann und der darüber hinaus eine Ausgestaltung aufweist, die es ermöglicht, auf diesem Wechselrahmen einen Planenaufbau oder eine Umrüstung auf einen Niederbordwagen und einen Transport mittels eines Gabelstaplers vornehmen zu können.

Ausserdem soll eine Ladeplattform für Transportfahrzeuge, wie Lastkraftwagen, deren Anhänger und für gleisgebundene Transportwagen, geschaffen werden, in der auch bei Nichtgebrauch die Teile für Planenaufbauten raumsparend untergebracht mitgeführt werden können.

Zur Lösung dieser Aufgabe wird ein Wechselrahmen für Contrainertransportfahrzeuge vorgeschlagen, der erfindungsgemäss in der Weise ausgebildet ist, dass der Wechselrahmen als beidseitig offener Rahmen ausgebildet ist, der plattenförmige Seiten- und Querwände, eine bodenseitige, sich teilweise oder über die gesamte Rahmenfläche erstreckende Abdeckung, die ganz oder abschnittsweise als fester Boden, als Gitterboden oder als Plane ausgebildet ist, an seinen Ober- und Unterseiten mit Containerverriegelungen in Wirkeingriff bringbare Beschläge und eine obere Abdeckung aufweist, die aus mindestens zwei formstabilen Deckelplatten besteht, die an dem Rahmen oder an an diesem befestigten Tragholmen scharnierartig gehalten und in aufgeklappter, vertikaler Stellung arretierbar ausgebildet sind.

Eine weitere Lösung der Aufgabe besteht darin, dass der Wechselrahmen mit in seinem Innenraum und in Rahmenlängsrichtung verlaufenden Tragholmen versehen ist, so dass der Innenraum in mehrere einzelne Kammern unterteilt ist, wobei darüber hinaus auch eine Unterteilung des Inhaltes vermittels einer zusätzlichen, im Innenraum angeordneten Querwand erfolgen kann. Jede so ausgebildete Kammer ist dann mit einer Deckelplatte verschliessbar.

Aufgrund der Ausbildung der bodenseitigen Abdeckung als Gitterboden ist der Innenraum des Wechselrahmens, wenn dieser auf dem Tragrahmen eines Containertransportfahrzeuges aufgesetzt ist, auch von unten einsehbar, was besonders vorteilhaft dann ist, wenn auf den auf den Tragrahmen des Transportfahrzeuges aufgesetzten Wechselrahmen ein Container aufgesetzt und mit dem Wechselrahmen verriegelt ist. Darüber hinaus ist besonders vorteilhaft die Innenraumaufteilung des Wechselrahmens zur Aufnahme der einzelnen Lastkraftwagenaufbauten, wie Bordwände, Steckbretter, Planbäume, Rungen und Abdeckplanen. Diese Aufbauten werden raumsparend mit dem Lastkraftwagen mitgeführt und können im Gebrauchsfalle jederzeit zur Anwendung gelangen.

Ausserdem sieht die Erfindung nach Anspruch 6 einen Wechselrahmen für gleisgebundene Containertragwagen, der mit Containerverriegelungseinrichtungen versehen ist, vor, der

a) auf die Tragplattform des Tragwagens aufsetzbar und mittels Containerverriegelungseinrichtungen mit der Tragplattform befestigbar ist,

b) obenseitig mit weiteren Containerverriegelungseinrichtungen zum Befestigen eines auf dem Wechselrahmen aufgesetzten Containers versehen ist,

c) behälterartig mit plattenförmigen Seiten- und Stirnwänden ausgebildet ist, und

d) eine bodenseitige Abdeckung aus einer starren Platte, einem gitterartigen Rost od. dgl. und einen Deckelteil aufweist, das aus mindestens zwei formstabilen Deckelplatten besteht, die an dem von den Seiten- und Stirnwänden gebildeten Rahmen angelenkt und aufklappbar und in aufgeklappter Stellung arretierbar ausgebildet sind, wobei an den Seitenwänden und/oder den Deckelplatten Haltemittel für einen Planenaufbau vorgesehen sind.

Ein derart ausgebildeter Wechselrahmen ermöglicht es, dass auch gleisgebundene Containertragwagen auf kleinsten Raum zusammengelegte Planenaufbauten, wie Rungen, Steckbretter, Plane u.dgl. mitführen können, damit der Tragwagen in denjenigen Fällen, in denen keine Container transportiert werden, so umgerüstet werden kann, dass auf dem mit der Tragplattform des Tragwagens verriegelten Wechselrahmen ein Planenaufbau erfolgen kann, um somit die von dem Wechselrahmen gebildete Ladefläche für den Transport andersartiger Güter zu verwenden. Damit ist erstmals eine Möglichkeit geschaffen, Tragplattformen von Containertragwagen, die ausschliesslich für den Transport von Containern ausgebildet sind, auch als Ladefläche für anderweitige Transportgüter zu verwenden, wobei der Wechselrahmen in bezug auf seine Höhe nur geringe Abmessungen aufweist, damit bei auf den Wechselrahmen aufgesetztem Container die zulässige Fahrzeuggesamthöhe nicht überschritten wird. Beim Containertransport werden die einzelnen Teile der Planenaufbauten im Innenraum des Wechselrahmens mitgeführt. Auch eine Umrüstung von Containertragwagen in Niederbordwagen ist möglich, da die Bordwände auf kleinsten Raum zusammengelegt in dem Wechselrahmen mitgeführt werden können.

Ferner ist Gegenstand der Erfindung nach Anspruch 7 ein Wechselrahmen, der als Ladeplattform und rahmenartig mit plattenförmigen Seiten- und Stirnwänden ausgebildet ist und eine bodenseitige Abdeckung aus einer starren Platte, einem gitterartigen Rost od.dgl., und einen Deckelteil aufweist, das aus mindestens zwei formstabilen Deckelplatten besteht, die an dem von den Seiten- und Stirnwänden gebildeten Rahmen angelenkt und aufklappbar und in aufgeklappter Stellung arretierbar ausgebildet sind, wobei an den Seitenwänden und/oder den Deckelplatten Haltemittel für einen Planenaufbau vorgesehen sind.

Eine derart ausgebildete Ladeplattform nach Art des erfindungsgemäss ausgebildeten Wechselrahmens für Transportfahrzeuge jeglicher Art ermöglicht, dass diese auf kleinsten Raum zusammengelegte Planenaufbauten, wie Rungen, Steckbretter, Planen u.dgl., mitführen können, damit das Transportfahrzeug in denjenigen Fällen, in denen die zu transportierenden Güter gegen äussere Einflüsse, wie Feuchtigkeit, Regen u.dgl., geschützt werden müssen, so umgerüstet werden kann, dass auf der Ladeplattform des Transportfahrzeuges ein Planenaufbau erfolgen kann, so dass die von dem Planenaufbau geschützte Ladeplattform für den Transport wettergeschützter Güter verwendet werden kann. Damit ist erstmals eine Möglichkeit geschaffen, Ladeplattformen für Transportfahrzeuge so auszubilden, dass die Ladeplattform auch nachträglich mit einem Planenaufbau versehen werden kann. In den Fällen, wo kein Planenaufbau benötigt wird, sind die Teile der Planenaufbauten im Innenraum der Ladeplattform mitführbar.

Mit dem Wechselrahmen in Verbindung mit Containertragwagen ist ein System geschaffen, welches dem Containerverkehr und dem Transport von Wechselaufbauten stärker Rechnung trägt als bisher. Der Vorteil besteht darin, unpaarig verlaufende Ladungsverkehre — aus Container- oder Wechselrahmeneinheiten — mit einem Minimum an Leerfracht durch Verlegung und Übereinanderstapelung der Wechselaufbauten abwickeln zu können. So ist es z.B. möglich, auf einem Stellplatz für einen 20 Fuss (1 Fuss=0,3048 m) Container insgesamt zehn zerlegte Wechselrahmen übereinander zu transportieren, wobei die Verriegelung zwischen den einzelnen Hohlbodenwechselrahmen aus dem jedem Rahmen eigenen *corner castings* kommt. Die Besonderheit und Abweichung von den herkömmlichen Wechselrahmen liegt darin, dass mit dem erfindungsgemässen Wechselrahmen dieser bis zu einer Höhe von etwa 240 mm demontierbar ist, wobei sich der Aufbau in dem aufklappbaren Innenraum des Grundkastens komplett verstauen lässt. Mit diesem Wechselrahmen können Container auf One-way-Basis per Lastkraftwagen von/nach dem Inland gefahren werden, wobei die bisher anfallenden Leerwege nach dem rasch durchzuführenden Aufbau des Wechselrahmens mit konventioneller Planengutladung abgedeckt werden können. Weiterhin lassen sich auf diese Weise auch 8-Fuss-Container auf zusammengelegten Wechselrahmengrundkästen aufsetzen und verriegeln und als Einpackstücke bei auch nur jeweils einem Kranhub per Waggon transportieren, so dass Leerrückführungen von Wechselrahmen aus verkehrsschwachen Gebieten mit einem Minimum an Aufwand und Kosten erfolgen können.

Vorteilhaft ist ausserdem, dass bei Einsatz dieses Wechselrahmens normale Containerstrassenchassis, die ja im Grundrahmen offen sind, problemlos mit diesen zusammengeklappten Wechselrahmen zu Plattformchassis umfunktioniert werden können oder nach erfolgtem Aufbau von Bordwänden, Plane und Spriegel dann als Planenfahrzeug zur Verfügung stehen.

Weitere vorteilhafte Weiterbildungen der Erfindung sind in den Unteransprüchen beschrieben.

Im folgenden wird der Gegenstand der Erfindung in den Zeichnungen erläutert. Es zeigen

Fig. 1 in einer Seitenansicht einen Wechselrahmen auf einem für den Containertransport vorgesehenen Lastkraftwagen,

Fig. 2 eine schaubildliche Ansicht des Wechselrahmens nach Fig. 1,

Fig. 3 einen Längsschnitt des Wechselrahmens nach Fig. 1,

Fig. 4 einen Querschnitt des Wechselrahmens nach Fig. 1, jedoch mit geöffneten Deckelplatten,

Fig. 5 eine schematische Darstellung eines Stellantriebs für die Deckelplatten des Wechselrahmens nach Fig. 1,

Fig. 6 eine Draufsicht auf eine weitere Ausführungsform eines Wechselrahmens mit aufklappbaren Deckelplatten,

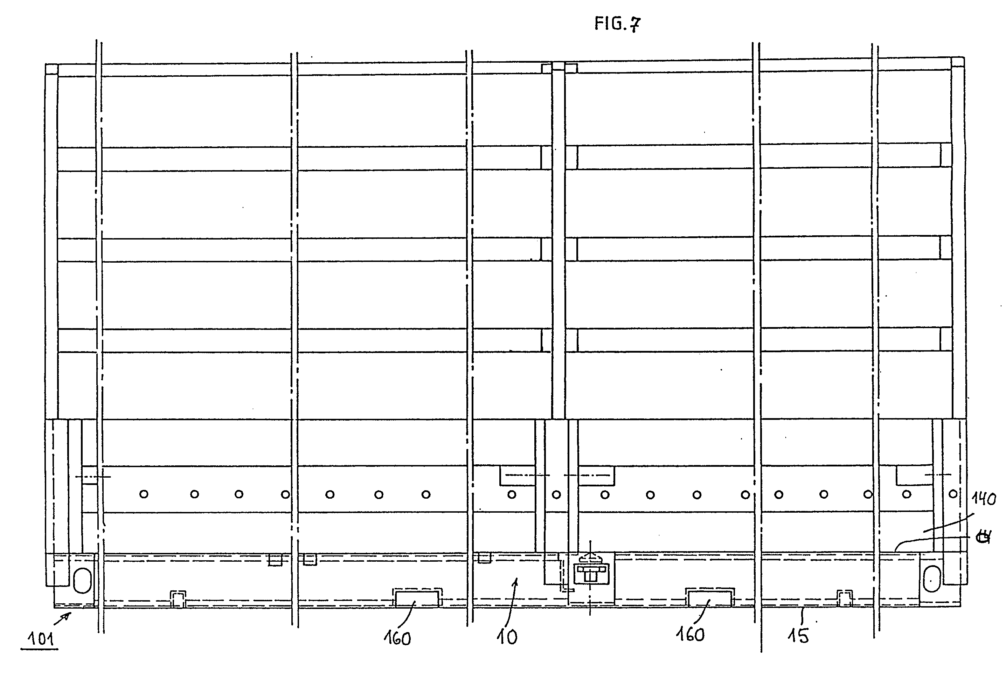

Fig. 7 eine Seitenansicht des Wechselrahmens nach Fig. 6 mit aufgesetzten Bordwänden, Rungen und Steckbrettern,

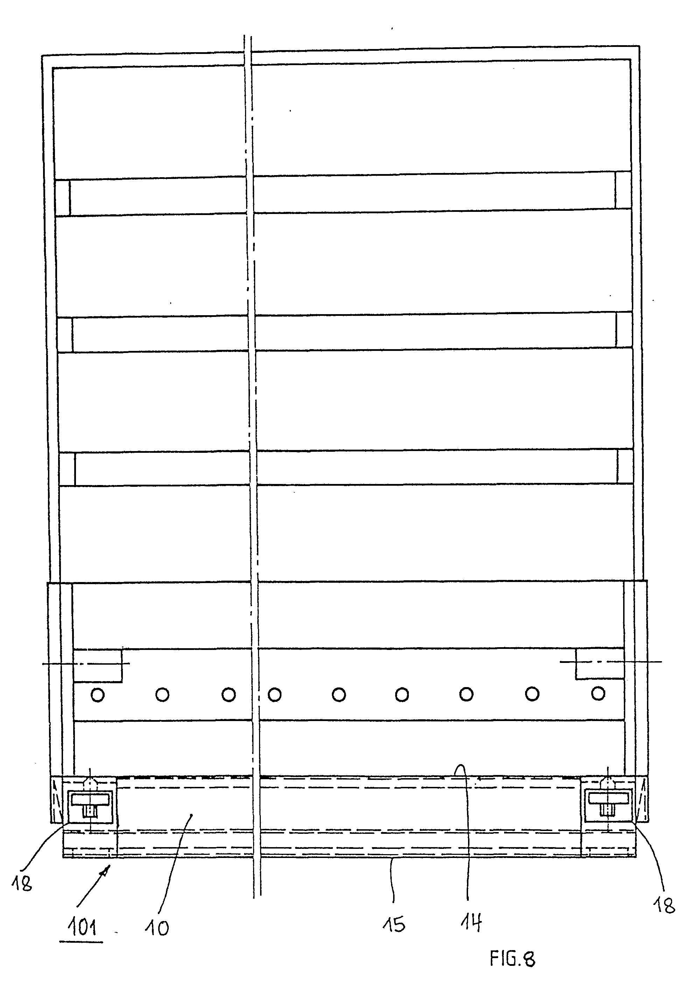

Fig. 8 eine Vorderansicht des Wechselrahmens nach Fig. 7,

Fig. 9 eine Vorderansicht des Wechselrahmens nach Fig. 6, jedoch mit in dessen Innenraum angeordneten Bordwänden,

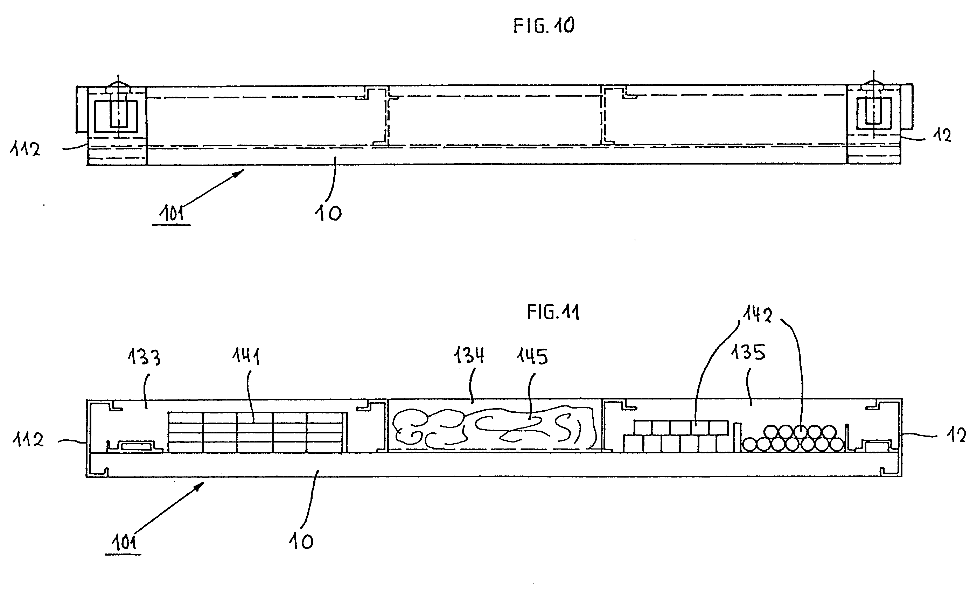

Fig. 10 eine Vorderansicht des Wechselrahmens nach Fig. 6, jedoch mit unbeladenem Innenraum,

Fig. 11 eine Vorderansicht des Wechselrahmens nach Fig. 6, jedoch mit beladenem Innenraum,

Fig. 12 einen senkrechten Schnitt durch den Wechselrahmen mit zwei aufklappbaren Deckelplatten,

Fig. 13 einen senkrechten Querschnitt durch den Wechselrahmen mit zwei aufklappbaren Deckelplatten,

Fig. 14 einen senkrechten Querschnitt durch den Wechselrahmen mit einer mittleren, feststehenden Deckelplatte und mit zwei seitlich zu dieser angeordneten, aufklappbaren Deckelplatten,

Fig. 15 einen senkrechten Querschnitt einer weiteren Ausführungsform des Wechselrahmens gemäss Fig. 14,

Fig. 16 einen senkrechten Querschnitt des Wechselrahmens mit drei aufklappbaren Deckelplatten,

Fig. 17 eine Seitenansicht eines Containertragwagens mit aufgesetztem Wechselrahmen und einem auf diesem angeordneten Container,

Fig. 18 eine Seitenansicht eines Lastkraftwagens mit einer zur Aufnahme der Teile eines Planenaufbaus ausgebilder Ladeplattform,

Fig. 19 eine Seitenansicht eines gleisgebundenen Transportfahrzeuges mit zur Aufnahme der Teile eines Planenaufbaus ausgebildeter Ladeplattform,

Fig. 20 eine schaubildliche Ansicht der Ladeplattform des Containertranportfahrzeuges,

Fig. 21 einen senkrechten Längsschnitt durch die Ladeplattform,

Fig. 22 einen senkrechten Querschnitt durch die Ladeplattform mit aufgestellten Deckelplatten, und

Fig. 23 eine Seitenansicht einer schematischen Darstellung des Stellantriebes für das Verschwenken der Deckelplatten der Ladeplattform.

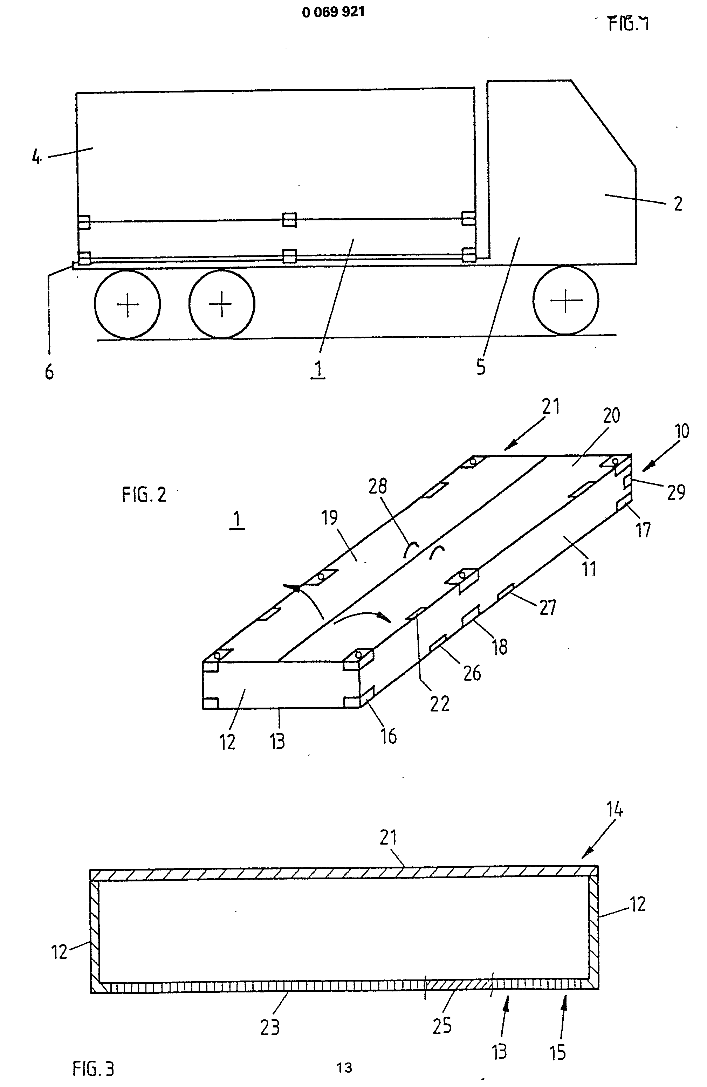

In Fig. 1 ist ein Containertransportfahrzeug, z.B. ein Lastkraftwagen 2, dargestellt, dessen Fahrzeugrahmen 5 zur Aufnahme und Halterung eines Containers ausgebildet ist. An dem Fahrzeugrahmen 5 sind in bekannter Weise Beschläge für Containerverriegelungen angeordnet, die zur Befestigung des Containers 4 dienen.

Mit 1 ist ein Wechselrahmen bezeichnet, der ebenfalls mittels Beschlägen 6 mit dem Fahrzeugrahmen 5 verbindbar ist. Hierzu sind an der Ober- und Unterseite 14, 15 des Wechselrahmens 1 an den Längsseiten Beschläge 16, 17, 18 ausgebildet, die ebenfalls zur Aufnahme von Containerverriegelungen dienen. Der Container 4 ist auf die Oberseite 14 des Wechselrahmens 1 aufgesetzt und mit diesem mittels Containerverriegelungen verbunden. Hierdurch wird eine formstabile Verbindung zwischen dem Container 4 und dem Fahrzeugrahmen 5 erzielt. Es ist auch möglich, statt eines Containers 4 weitere Wechselrahmen 1 auf der Oberseite 14 des in Fig. 1 und 2 dargestellten Wechselrahmens 1 zu lagern, wobei auch hierbei die ortsfeste Befestigung durch in die Beschläge 16, 17, 18 eingebrachte Containerverriegelungen erfolgt.

Der Wechselrahmen 1 besteht nach Fig. 2 aus einem Rahmen 10 mit plattenförmigen Seiten- und Querwänden 11, 12. An diesen ist eine bodenseitige Abdeckung 13 angeordnet, die auch formstabil sein kann. Der Deckel 21 besteht aus zwei formstabilen Deckelplatten 19, 20, die an dem Rahmen 10 und/oder den Seitenwänden 11 aufklappbar und vertikal arretierbar gelagert sind. Der Rahmen 10 kann beispielsweise aus Längsprofilen bestehen, in die die Seitenwände 11 und Querwände 12 eingesetzt sind. An den Eckabschnitten des Rahmens 10 sind an der Oberseite 14 und Unterseite 15 Beschläge 16, 17 für Containerverriegelungen ausgebildet. Bei langen Wechselrahmen 1 können zusätzlich im Mittelabschnitt des Rahmens 10 an den Seitenwänden 11 ober- und unterseitig Beschläge 18 für Containerverriegelungen vorgesehen werden. An den Deckelplatten 19, 20 sind Verschlussmittel 18, 20 vorgesehen, die zur Aufnahme von Verschlussgliedern und Plomben beim Transitverkehr dienen. Bei der Verwendung von vier Deckelteilen ist der Rahmen 10 zusätzlich mittig und in Querrichtung verlaufend vermittels einer senkrechten, in der Zeichnung nicht dargestellten Querwand versteift.

Um gerade beim Transitverkehr einen Einblick in den Wechselrahmen 1 zu ermöglichen, ohne dass der Deckel 21 geöffnet werden muss, ist das Bodenteil 13 gitterartig ausgebildet. Vorzugsweise wird als Bodenteil 13 ein Gittergeflecht 23 verwendet (Fig. 3). Dieses Gittergeflecht 23 kann mittels Trägern 25 versteift werden, die zwischen den Seitenwänden 11 und/oder Querwänden 12 angeordnet sind.

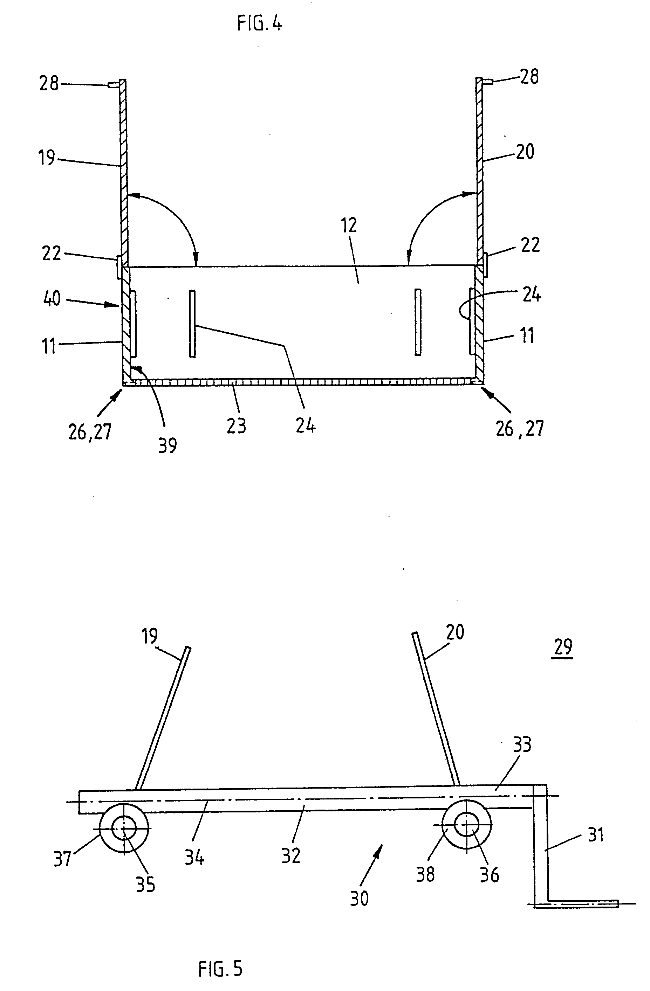

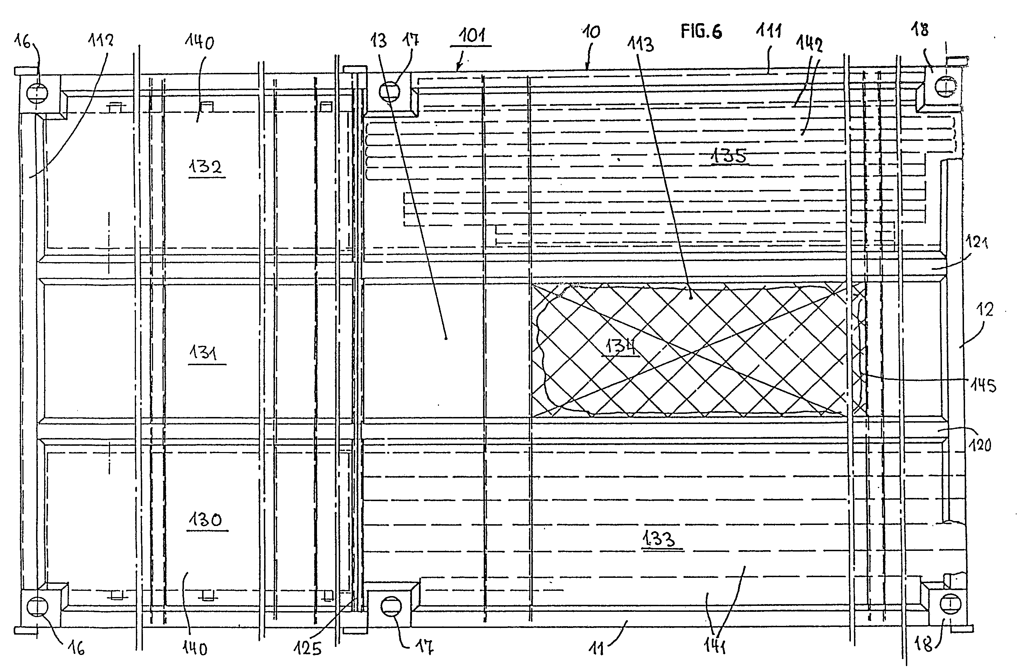

Zum Öffnen der Deckelplatten 19, 20 können diese mittels Scharniere 22 mit dem Rahmen 10 und/oder den Seitenwänden 11 verbunden sein (Fig. 2, 4). Es ist aber auch möglich, einen Stellantrieb 29 vorzusehen, mittels dem die Deckelplatten 19, 20 ausschwenkbar und verschliessbar sind. Dieser Stellantrieb 29 kann als hydraulischer Stellmotor oder aber als mechanisches Stellgetriebe 30 ausgebildet sein, wie in Fig. 5 dargestellt. Dieses Stellgetriebe 30 besteht aus einer mittels einer Handkurbel 31 betätigbaren Gewindeschnecke 32, die sich über die Breite des Wechselrahmens 1 erstreckt. Die endabschnittsseitigen Gewindeabschnitte 32, 33 weisen eine einander entgegengesetzte Gewindesteigung auf. Diese Gewindeabschnitte 33, 34 sind im Wirkeingriff mit Zahnrädern 37, 38, die fest auf Schwenkachsen 35, 36 angeordnet sind. Mit den Schwenkachsen 35, 36 ist jeweils eine Deckelplatte 19, 20 verbunden. Durch Drehen der Handkurbel 31 ist es somit möglich, die Deckelplatten 19, 20 synchron zu öffnen bzw. zu verschliessen.

Um den Transport der Wechselrahmen 1 mittels Gabelstaplern zu ermöglichen, sind an den Seitenwänden 11 bzw. in dem Rahmen 10 bodenseitig Ausnehmungen 26, 27 mit verstärkten Auflageflächen ausgebildet. In diese Ausnehmungen 26, 27 sind Trageinrichtungen von Gabelstaplern einschiebbar, um den Wechselrahmen 1 anzuheben und transportieren zu können. Es ist aber auch möglich, an den oberseitigen Beschlägen 16, 17 Haken anzuordnen, in die Ketten eingehängt werden können, um so mittels Hubeinrichtungen den Wechselrahmen 1 transportieren zu können.

Der Wechselrahmen 1 ist in seinen Dimensionen so ausgebildet, dass die für einen Planenaufbau erforderlichen Elemente, wie Stirnwand, Heckklappe, Planen, Steckbretter u.dgl. in ihm gelagert werden können. Sofern die Deckelplatten 19, 20 im geschlossenen Zustand als Lagerfläche dienen sollen, sind an den Aussenflächen 40 der Seitenwände 11 und Querwände 12 Haltemittel 24 angeordnet, die zur Befestigung der Elemente des Planenaufbaus dienen. Es ist aber auch möglich, die Deckelplatten 19, 20 im aufgeklappten Zustand als Seitenklappen des Planenaufbaus zu benutzen. In diesem Fall werden vorzugsweise an den Innenflächen 39 der Seitenwände 11 und Querwände 12 die für den Planenaufbau erforderlichen Haltemittel 24 vorgesehen.

Der Wechselrahmen 1 erweitert die Verwendbarkeit von für den Containertransport vorgesehenen Transportfahrzeugen, wie Lastkraftwagen und deren Anhänger, sowie gleisgebundenen Containertragwagen. Hierbei können die Wechselrahmen 1 stets in einer derartigen Grösse hergestellt werden, dass ihre Grundflächen denen der standardisierten oder Sondercontainer entspricht. Aufgrund ihrer raumsparenden Gestaltung sind die Wechselrahmen 1 ferner für sich versandfähig, wobei die Wechselrahmen 1 zum Versand entweder auf einer Seitenwand 11 aufgestellt oder aber auch übereinander gestapelt werden können. Durch die Verschliess- und Verplombbarkeit ist gewährleistet, dass durch ein Mitführen eines Wechselrahmens 1 beim grenzüberschreitenden Containertransport keine Zeitverluste durch Organe der Grenzbehörden eintreten. An den Deckelplatten 19, 20 und/oder an den Querwänden 12 sind dann verplombbare Verschliessmittel 28 vorgesehen.

Nach der in Fig. 6 dargestellten Ausführungsform besteht der Wechselrahmen 101 aus einem Rahmen 10 mit plattenförmigen Seitenwänden 11, 111 und plattenförmigen Querwänden 12, 112. An diesen Seiten- und Querwänden 11, 111, 12, 112 ist eine bodenseitige Abdeckung 13 angeordnet, die in bezug auf ihre gesamte Fläche als Gitterboden 113, jedoch auch abschnittsweise als Gitterboden, ausgebildet sein kann. Der Gitterboden 113 ist so ausgebildet, dass dieser eine ausreichende Formstabilität aufweist, wenn auf dem Gitterboden 113 sich eine Ladung befindet.

Der Rahmen 10 ist mittels eines Deckels 21 verschliessbar, der aus mindestens zwei formstabilen Deckelplatten 19, 20 besteht, die an dem Rahmen 10 und/oder den Seitenwänden 11, 111 aufklappbar und vertikal arretierbar gelagert sind. Der Rahmen 10 kann beispielsweise aus Längsprofilen bestehen, in die die Seitenwände 11, 111 und die Querwände 12, 112 eingesetzt sind. An den Eckabschnitten des Rahmens 10 sind an der Oberseite 14 und der Unterseite 15, wie bereits ausgeführt, Beschläge 16, 17 und 18 für Containerverriegelungen ausgebildet.

Bei langen Wechselrahmen 101 kann zusätzlich im Mittelabschnitt des Rahmens 10 eine Querwand 125 vorgesehen sein, die mit ihren freien Enden an den Seitenwänden 11, 111 befestigt ist (Fig. 6). Ausserdem können auch im Mittelabschnitt des Rahmens 10 an den Seitenwänden 11, 111 ober- und unterseitig Beschläge 18 für Containerverriegelungen vorgesehen sein.

An den Deckelplatten 19, 20 sind in der Zeichnung nicht dargestellte Verschlussmittel vorgesehen, die zur Aufnahme von Verschlussgliedern und Plomben beim Transitverkehr dienen.

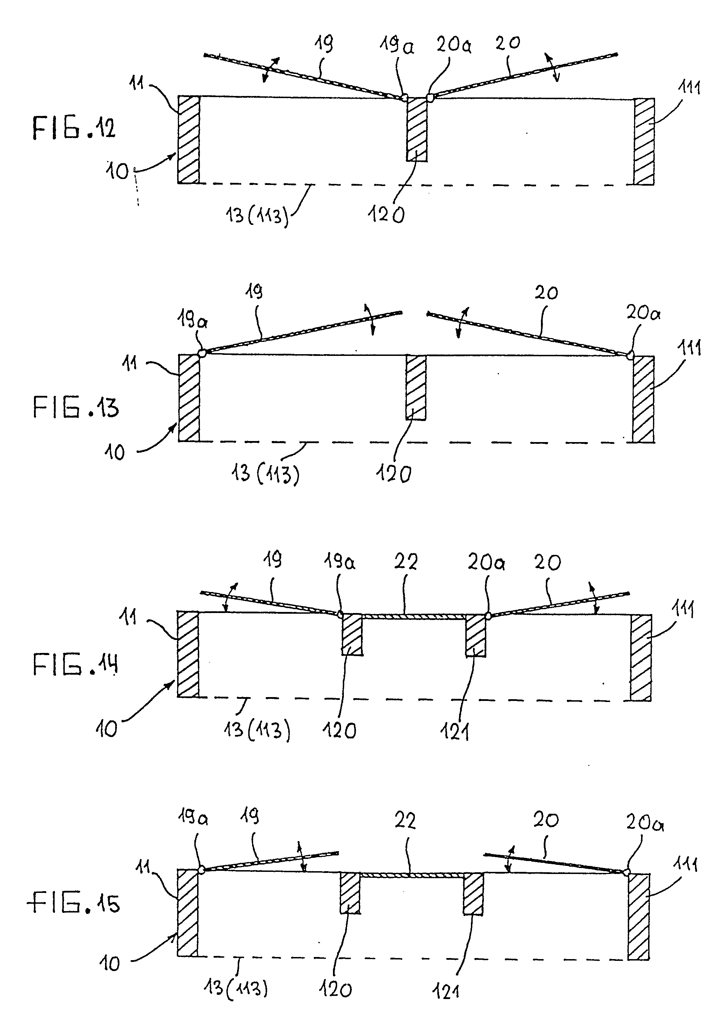

Wie Fig. 12 und 13 zeigen, kann der Rahmen 10 des Wechselrahmens 101 mit einem in Rahmenlängsrichtung und parallel zu den Seitenwänden 11, 111 verlaufenden Tragholm 120 versehen sein. Durch die Verwendung eines Tragholms 120 ist der Innenraum des Rahmens 10 in zwei Kammern unterteilt, worauf nachstehend noch näher eingegangen wird. Obenseitig ist dann der Wechselrahmen 101 mittels zwei Deckelplatten 19, 20 verschliessbar ausgebildet. Bei der in Fig. 12 gezeigten Ausführungsform sind die beiden Deckelplatten 19, 20 bei 19a, 20a scharnierartig an den parallel zu den Seitenwänden 11, 111 des Rahmens 10 verlaufenden Längskanten des Tragholmes 120 angelenkt, während bei der in Fig. 13 gezeigten Ausführungsform die beiden Deckelplatten 19, 20 bei 19a, 20a im oberen Bereich der Seitenwände 11, 111 des Rahmens 10 angelenkt sind.

Nach Fig. 6 ist der Rahmen 10 des Wechselrahmens 101 mit zwei in Rahmenlängsrichtung verlaufenden Tragholmen 120, 121 versehen, die, ebenso wie auch der Tragholm 120, entsprechend den in Fig. 12 und 13 gezeigten Ausführungsformen mit ihren freien Enden an den Querwänden 12, 112 des Rahmens 10 befestigt sind. Die Tragholme 120, 121 können bis zur bodenseitigen Abdeckung 113 verlängert ausgebildet sein.

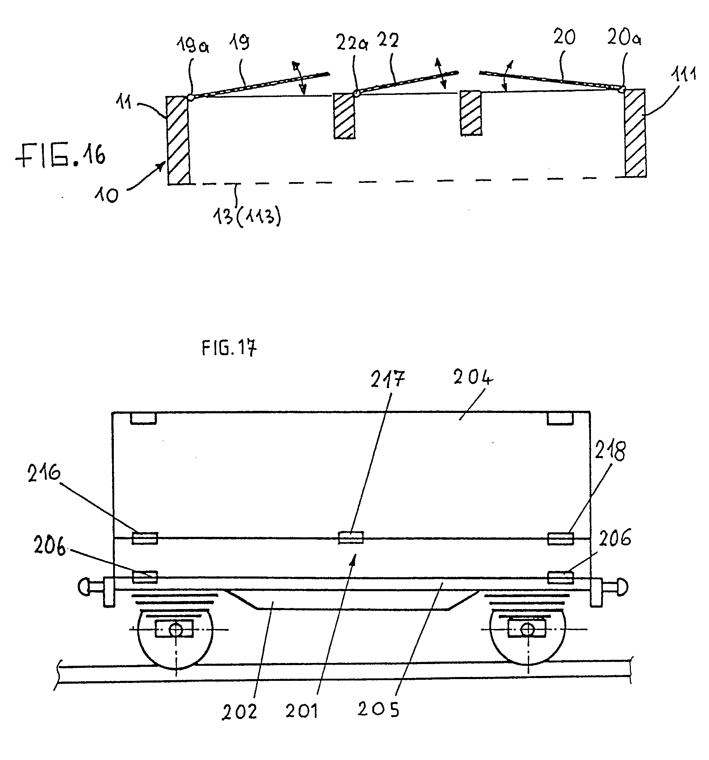

Bei den in Fig. 14 und 15 gezeigten Ausführungsformen sind die beiden Tragholme 120, 121 vermittels einer feststehenden Deckelplatte 22 miteinander verbunden, die zusammen mit den beiden anderen verschwenkbaren Deckelplatten 19, 20 die obere Abdeckung 21 des Wechselrahmens 101 darstellt. Bei der in Fig. 14 gezeigten Ausführungsform sind die beiden Deckelplatten 19, 20 bei 19a, 20a an den den Seitenwänden 11, 111 des Rahmens 10 gegenüberliegenden Längskanten der Tragholme 120, 121 scharnierartig angelenkt, während bei der Ausführungsform gemäss Fig. 15 die Anlenkung der beiden Deckelplatten 19, 20 bei 19a, 20a im oberen Bereich der Seitenwände 11, 111 des Rahmens 10 erfolgt.

Um auch den von den beiden Tragholmen 120, 121 gebildeten Innenraum von oben zugänglich zu machen, kann die feststehende Deckelplatte 22 als Schwenkplatte ausgebildet sein. Die Deckelplatte 22 ist dann bei 22a an einem der beiden Tragholme 120, 121 scharnierartig angelenkt und kann in gleicher Weise wie die Deckplatten 19, 20 verschwenkt und in vertikaler Stellung arretiert werden.

Ist der Innenraum des Rahmens 10 des Wechselrahmens 101 mit zwei Längstragholmen 120, 121 und einer mittleren Querwand 125 versehen, so ist der Innenraum in sechs Kammern 130, 131, 132, 133, 134, 135 unterteilt (Fig. 6). Jede dieser Kammern ist dann mittels einer verschwenkbaren Deckelplatte verschliessbar, wobei auch bei entsprechend grossen Abmessungen der Kammern jede Kammer vermittels zwei Deckelplatten verschliessbar sein kann.

Die Unterteilung des Innenraumes des Rahmens 10 des Wechselrahmens 101 in mehrere Kammern ist besonders vorteilhaft, da dann in den Kammern die einzelnen Teile der Aufbauten eines Lastkraftwagens mühelos unterbringbar sind. So dienen die Kammern zur Aufnahme der Bordwände 140, der Einlege- oder Steckbretter 141, der Rungen und Planbäume 142 und zur Aufnahme der Abdeckplane 145 (Fig. 6, 9 und 11). Vorteilhafterweise ist die bodenseitige Abdeckung im Bereich derjenigen Kammer, die die zusammengefaltete Abdeckplane 145 des Lastkraftwagens aufnimmt, als Gitterboden ausgebildet, so dass auch in demjenigen Fall, in dem der Lastkraftwagen mit Bordwänden versehen ist, die Abdeckplane mühelos in dem Behälter mitgeführt und beispielsweise bei Zollinspektionen, im Transitverkehr u.dgl. von unten her aufgrund der gitterrostartigen Ausgestaltung der bodenseitigen Abdeckung einsehbar ist; jedoch kann auch die bodenseitige Abdeckung des Rahmens 10 im Bereich der anderen Kammern ebenfalls als Gitterboden ausgebildet sein.

Um den Wechselrahmen 101 auch mit einem Gabelstapler transportieren zu können, weist der Rahmen 10 des Wechselrahmens 101 im Bereich seiner bodenseitigen Abdeckung mindestens zwei quer zur Rahmenlängsrichtung verlaufende Taschen 160 zum Einführen der Arme eines Gabelstaplers auf.

Der bodenseitig offen ausgebildete Rahmen 10 ist mit einer bodenseitigen, sich teilweise oder über die gesamte Rahmenfläche erstreckenden Abdeckung versehen, die ganz oder abschnittsweise als fester Boden, als Gitterboden oder als Plane ausgebildet ist.

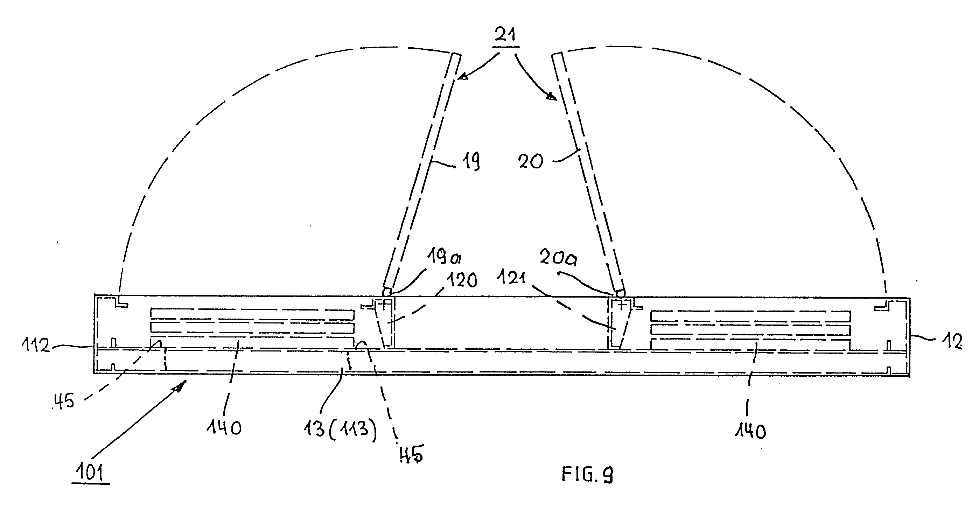

Bei einem weiteren Ausführungsbeispiel ist der Rahmen 10 des Wechselrahmens 101 im Bereich der die Bordwände 140 aufnehmenden Kammer 130, 312 offen ausgebildet und weist zur Halterung der Bordwände Bordwandabstützflächen 45 auf (Fig. 9). Im Bereich der bodenseitig offen ausgebildeten Kammern 130, 132 ist der Rahmen 10 mittels einer Schutzplane od.dgl. abgedeckt, damit während der Fahrt eine Verschmutzung der Bordwände vermieden wird. Auch die in dem Rahmen 10 zwischen den beiden Kammern 130, 132 liegende Kammer 131 kann ebenfalls offen ausgebildet sein und ist dann in gleicher Weise mit einer Schutzplane abgedeckt.

Ist der Rahmen 10 im Bereich seiner Kammern 133, 134, 135 offen ausgebildet, dann erfolgt ein Verschliessen der Öffnungen vermittels abnehmbarer Gitterroste oder vermittels einer oder mehrerer abnehmbarer Platten, die mit entsprechenden Verbindungsmitteln an dem Rahmen 10 gehalten sind.

Dadurch, dass der Rahmen 10 bodenseitig offen ausgebildet ist und mittels abnehmbarer Abdekkungen geöffnet werden kann, ist der Innenraum des Rahmens 10 des Wechselrahmens 101 jederzeit einsehbar.

Es besteht jedoch auch die Möglichkeit, eine der beiden Querwände 12, 112 oder beide Querwände 12, 112 des Rahmens 10 des Wechselrahmens 101 von diesem abnehmbar auszubilden, wobei auch nach einer weiteren Ausführungsform die Möglichkeit besteht, eine oder beide Querwände des Rahmens mit verschliessbaren Durchbrechungen zu versehen. Auf diese Weise ist die Möglichkeit gegeben, durch Öffnen der Querwände die dahinterliegenden Räume bzw. Kammern des Behälters einsehen zu können.

Eine weitere Möglichkeit, um den Innenraum bzw. die einzelnen Kammern des Behälters einsehen zu können, besteht darin, dass in den Seiten- und/oder Querwänden 11, 111 und 12, 112 des Rahmens 10 des Wechselrahmens 101 fensterartige Durchbrechungen vorgesehen sind, die mittels Abdeckgläser oder abnehmbaren Verschlussplatten verschliessbar sein können. Für das Öffnen und Schliessen der Deckelplatten des Rahmens 10 des Wechselrahmens 101 sind die gleichen Einrichtungen vorgesehen, wie diese vorangehend bei dem Wechselrahmen 1 beschrieben sind.

In Fig. 17 ist ein als Gleisfahrzeug ausgebildeter Containertragwagen 202 dargestellt, dessen Fahrzeugrahmen bzw. Tragplattform 205 zur Aufnahme und Halterung eines Containers dient. An der Tragplattform 205 sind in an sich bekannter Weise ausgebildete Beschläge für eine Containerverriegelung vorgesehen, die zur Verriegelung des Containers 204 auf der Tragplattform dienen.

Zwischen der Tragplattform 5 und dem Container 204 ist nach der in Fig. 17 gezeigten Ausführungsform ein Wechselrahmen 201 angeordnet, der mittels Beschlägen 206 mit der Tragplattform verbindbar ist. Der Wechselrahmen 201 ist entsprechend dem Wechselrahmen 1 bzw. 101 ausgebildet.

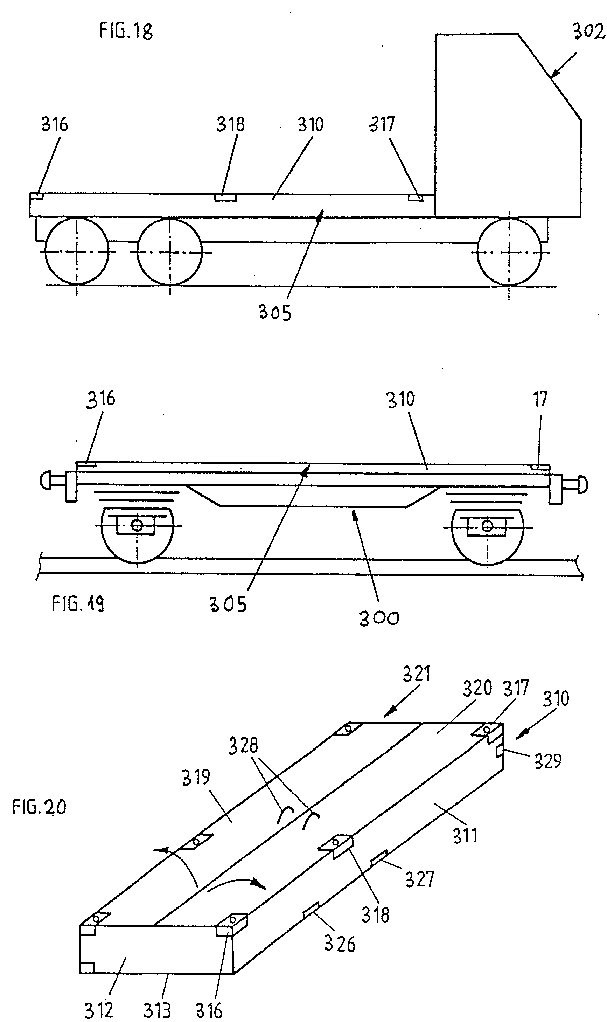

In Fig. 18 ist ein Lastkraftwagen 302 und in Fig. 19 ein gleisgebundenes Transportfahrzeug, wie Niederbordwagen od.dgl. 300 dargestellt, deren auf dem Fahrzeugrahmen bzw. Traggestell angeordnete Ladeplattform 305 entsprechend dem Wechselrahmen 1 bzw. 101 ausgebildet ist.

Die Ladeplattform 305 besteht aus dem Rahmen 310 mit plattenförmigen Seiten- und Querwänden 311, 312. Dieser Rahmen 310 weist eine bodenseitige Abdeckung 313 auf, die formstabil sein kann. Obenseitig ist der Rahmen 310 mittels eines Deckelteils 321 verschliessbar, der aus zwei formstabilen Deckelplatten 319, 320 besteht, die an dem Rahmen 310 und/oder seinen Seitenwänden 311 aufklappbar und vertikal arretierbar gelagert sind.

Der Rahmen 310 kann beispielsweise aus Längsprofilen bestehen, in die die Seitenwände 311 und die Querwände 312 eingesetzt sind. An den Deckelplatten 319, 320 des Deckelteils 321 sind Verschlussmittel 328 vorgesehen, die zur Aufnahme von Verschlussgliedern und Plomben beim Transitverkehr dienen. Bei der Verwendung von vier Deckelteilen ist der Rahmen 310 zusätzlich mittig und in Querrichtung verlaufend mittels einer senkrechten, in der Zeichnung nicht dargestellten Querwand versteift.

Um gerade beim Transitverkehr einen Einblick in die Ladeplattform 305 zu ermöglichen, ohne dass das Deckelteil 321 geöffnet werden muss, ist das Bodenteil 313 des Rahmens 310 gitterartig ausgebildet. Da die die Ladeplattform 305 tragenden Fahrzeuggestelle aus Längs- und Querträgern bestehen, ist ein Durchblick durch das Fahrgestell in den Innenraum der Ladeplattform somit gewährleistet (Fig. 26). Dieses Gittergeflecht 323 kann mittels Trägern 325 versteift sein, die zwischen den Seitenwänden 311 und/oder den Querwänden 312 angeordnet sind.

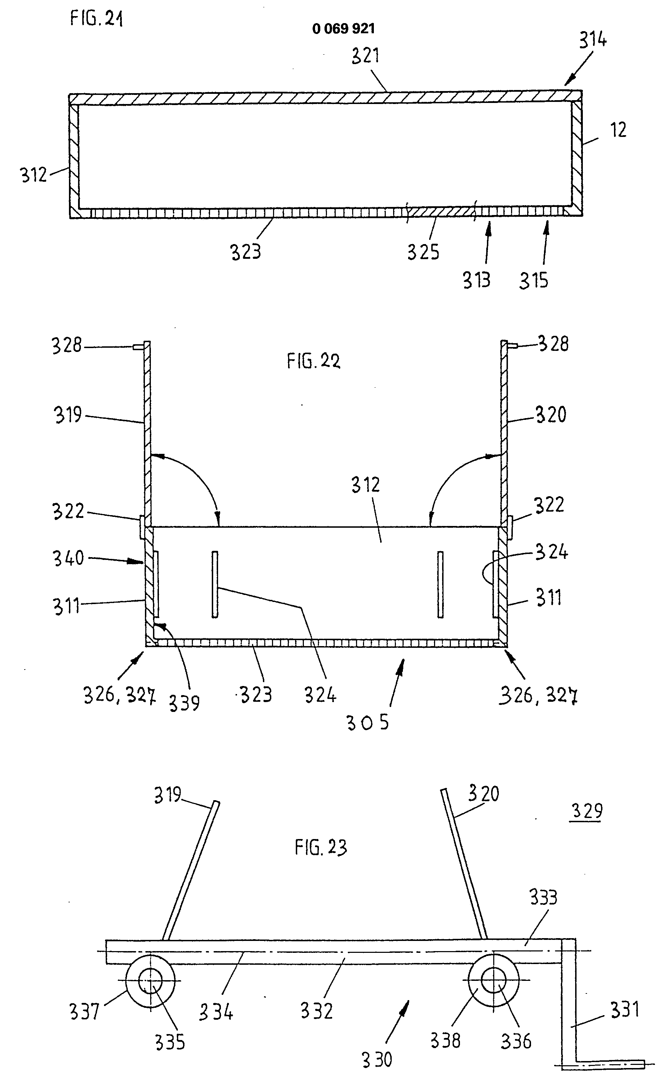

Zum Öffnen der Deckelplatten 319, 320 können diese mittels Scharniere 322 mit dem Rahmen 310 und/oder dessen Seitenwänden 311 verbunden sein (Fig. 25 und 22). Es ist aber auch möglich, einen Stellantrieb 329 vorzusehen, mittels dem die Deckelplatten 319, 320 verschwenkbar und verschliessbar sind. Dieser Stellantrieb 329 kann ebenfalls als hydraulischer Stellmotor oder aber als mechanisches Stellgetriebe 330 ausgebildet sein (Fig. 23). Dieses Stellgetriebe 330 besteht aus einer mittels einer Handkurbel 331 betätigbaren Gewindeschnecke 332, die sich über die Breite des Rahmens 310 erstreckt. Die endabschnittsseitigen Gewindeabschnitte 333, 334 weisen eine einander entgegengesetzte Gewindesteigung auf. Diese Gewindeabschnitte 333, 334 stehen in Wirkeingriff mit Zahnrädern 337, 338, die fest auf Schwenkachsen 335, 336 angeordnet sind. Mit den Schwenkachsen 335, 336 ist jeweils eine Deckelplatte 319 bzw. 320 verbunden. Durch Drehen der Handkurbel 331 ist es möglich, die Deckelplatten 319, 320 synchron zu öffnen bzw. zu verschliessen.

Die Ladeplattform 305 ist vorzugsweise in ihren Dimensionen so ausgebildet, dass die für einen Planenaufbau erforderlichen Elemente, wie Stirnwand, Heckklappe, Planen, Steckbretter u.dgl., untergebracht werden können. Sofern die Deckelplatten 319, 320 im geschlossenen Zustand als Ladefläche dienen sollen, sind an den Aussenflächen 340 der Seitenwände 311 und der Querwände 312 Haltemittel 324 angeordnet, die zur Befestigung der Elemente des Planenaufbaus dienen. Es ist aber auch möglich, die Deckelplatten 319, 320 im aufgeklappten Zustand als Seitenklappen des Planenaufbaus zu benutzen. In diesem Fall werden vorzugsweise an den Innenflächen 339 der Seitenwände 311 und der Querwände 312 die für den Planenaufbau erforderlichen Haltemittel 324 vorgesehen.

Die erfindungsgemäss ausgebildete Ladeplattform für Transportfahrzeuge erweitert die Verwendbarkeit von für den Transport von Gütern aller Art vorgesehenen Lastkraftwagen und deren Anhänger sowie auch gleisgebundene Transportfahrzeuge. Darüber hinaus kann die Ladeplattform 305 auch obenseitig mit in an sich bekannter Weise ausgebildeten Containerverriegelungseinrichtungen versehen sein, die in Fig. 20 bei 316, 317, 318 angedeutet sind. Auf diese Weise ist ein Transport von Containern auf der Ladeplattform 305 möglich, während die für den Planenaufbau erforderlichen Elemente im Innenraum der Ladeplattform unterbringbar sind.

Durch die Verschliess- und Verplombbarkeit der Deckelteile der Ladeplattform 305 ist gewährleistet, dass beim grenzüberschreitenden Transport keine Zeitverluste durch Organe der Grenzbehörde eintreten, da der Innenraum der Ladeplattform 305 von unten einsehbar ist. Es besteht selbstverständlich darüber hinaus auch die Möglichkeit, die Bodenabdeckung 313 der Ladeplattform 305 geschlossen auszubilden, wenn dies erforderlich sein sollte. An den Deckelplatten 319, 320 und/oder an den Querwänden 312 sind verplombbare Verschliessmittel 328 vorgesehen.

**Patentansprüche**

1. Wechselrahmen für mit Containerverriegelungseinrichtungen an sich bekannte Containertransportfahrzeuge (2, 202) wie Lastkraftwagen, Anhänger oder gleisgebundene Containertragwagen, wobei der Wechselrahmen (1; 101; 201) mit dem Containertransportfahrzeug einerseits und mit dem Container (4) andererseits verbindbar ist und als beidseitig offener Rahmen (10) ausgebildet ist, der plattenförmige Seiten- und Querwände (11, 111; 12, 112), eine bodenseitige, sich teilweise oder über die gesamte Rahmenfläche erstreckende Abdeckung (13), die ganz oder abschnittsweise als fester Boden, als Gitterboden (113) oder als Plane ausgebildet ist, an seinen Ober- und Unterseiten (14, 15) mit Containerverriegelungen in Wirkeingriff bringbare Beschläge (16, 17, 18) und eine obere Abdeckung (21) aufweist, die aus mindestens zwei formstabilen Deckelplatten (19, 20) besteht, die an dem Rahmen (10) oder an an diesem befestigten Tragholmen (120, 121) scharnierartig gehalten und in aufgeklappter, vertikaler Stellung arretierbar ausgebildet sind.

2. Wechselrahmen nach Anspruch 1, wobei der Rahmen (10) mittig einen in Rahmenlängsrichtung verlaufenden, mit seinen beiden Enden im oberen Bereich der Rahmenquerwände (12, 112) befestigten Tragholm (120) aufweist, der an jeder seiner beiden Längskanten eine aufklappbare Deckelplatte (19, 20) trägt.

3. Wechselrahmen nach Anspruch 1, wobei der Rahmen (10) mittig einen in Rahmenlängsrichtung verlaufenden, mit seinen beiden Enden im oberen Bereich der Rahmenquerwände (12, 112) befestigten Tragholm (120) aufweist und an seinen beiden Längsseitenwänden (1, 111) je eine aufklappbare Deckelplatte (19, 20) scharnierartig gehalten ist.

4. Wechselrahmen nach Anspruch 1, wobei der Rahmen (10) zwei in Rahmenlängsrichtung und parallel zueinander und zu den Rahmenlängsseitenwänden (11, 111) verlaufende Tragholme (120, 121) aufweist, die mit ihren Enden im oberen Bereich der Rahmenquerwände (12, 112) befestigt sind, wobei die beiden Tragholme (120, 121) über eine feststehende Deckelplatte (22) verbunden sind und wobei jeder Tragholm (120, 121) an seinen der Rahmenlängsseitenwand (11; 111) gegenüberliegenden Längskante eine aufklappbare Deckelplatte (19, 20) trägt.

5. Wechselrahmen nach Anspruch 1, wobei der Rahmen (10) zwei in Rahmenlängsrichtung und parallel zueinander und zu den Rahmenlängsseitenwänden (11, 111) verlaufende Tragholme (120, 121) aufweist, die mit ihren Enden im oberen Bereich der Rahmenquerwände (12, 112) befestigt sind, wobei die beiden Tragholme (120, 121) über eine feststehende Deckelplatte (22) verbunden sind und wobei der Rahmen (10) an seinen beiden Längsseitenwänden (11, 111) je eine aufklappbare Deckelplatte (19, 20) trägt.

6. Wechselrahmen nach Anspruch 1 für gleisgebundene Containertragwagen, der mit Containerverriegelungseinrichtungen versehen ist, wobei der Wechselrahmen (201)

a) auf die Tragplattform (205) des Tragwagens (202) aufsetzbar und mittels Containerverriegelungseinrichtungen mit der Tragplattform (205) befestigbar ist,

b) obenseitig mit weiteren Containerverriegelungseinrichtungen zum Befestigen eines auf dem Wechselrahmen (201) aufgesetzten Containers (204) versehen ist,

c) behälterartig mit plattenförmigen Seiten- und Stirnwänden (11, 12) ausgebildet ist, und

d) eine bodenseitige Abdeckung (13) aus einer starren Platte, einem gitterartigen Rost od.dgl. (23) und einen Deckelteil (21) aufweist, das aus mindestens zwei formstabilen Deckelplatten (19, 20) besteht, die an dem von den Seiten- und Stirnwänden (11, 12) gebildeten Rahmen (10) angelenkt und aufklappbar und in aufgeklappter Stellung arretierbar ausgebildet sind, wobei an den Seitenwänden (11) und/oder den Deckelplatten (19, 20) Haltemittel (24) für einen Planenaufbau vorgesehen sind.

7. Wechselrahmen nach Anspruch 1, wobei der Wechselrahmen als Ladeplattform (305) des Transportfahrzeuges (302) und rahmenartig (310) mit plattenförmigen Seiten- und Stirnwänden (311, 312) ausgebildet ist und eine bodenseitige Abdeckung (313) aus einer starren Platte, einem gitterartigen Rost od.dgl. (323), und einen Deckelteil (321) aufweist, das aus mindestens zwei formstabilen Deckelplatten (319, 320) besteht, die an dem von den Seiten- und Stirnwänden (311, 312) gebildeten Rahmen (310) angelenkt und aufklappbar und in aufgeklappter Stellung arretierbar ausgebildet sind, und wobei an den Seitenwänden (311) und/oder den Deckelplatten (319, 320) Haltemittel (324) für einen Planenaufbau vorgesehen sind.

8. Wechselrahmen nach den Ansprüchen 1 bis 7, wobei an den Seitenwänden (11) und/oder den Deckelplatten (19, 20) Haltemittel (24) für einen Planenaufbau ausgebildet sind.

9. Wechselrahmen nach Anspruch 8, wobei die Haltemittel (24) an der Innenfläche (39) der Seitenwände (11) und/oder der Deckelplatte (19, 20) ausgebildet sind.

10. Wechselrahmen nach Anspruch 9, wobei die Haltemittel (24) an den Aussenflächen (40) der Seitenwände (11) und/oder Deckelplatten (19, 20) angeordnet sind.

11. Wechselrahmen nach einem der vorangegangenen Ansprüche 1 bis 10, wobei die bodenseitige Abdeckung (13) aus einem Gittergeflecht (23) besteht.

12. Wechselrahmen nach einem der vorangegangenen Ansprüche 1 bis 11, wobei das Gittergeflecht (23) mittels zwischen den Seitenwänden (11) und/oder Querwänden (12) angeordneten Trägern (25) versteift ist.

13. Wechselrahmen nach den Ansprüchen 1 bis 12, wobei an den Seitenwänden (11) bodenseitig Ausnehmungen (26, 27) mit auf Trageinrichtungen von Gabelstaplern od.dgl. abstützbaren Auflageflächen ausgebildet sind.

14. Wechselrahmen nach den Ansprüchen 1 bis 13, wobei an den Deckelplatten (19, 20) und/oder den Querwänden (12) verplombbare Verschlussmittel (28) ausgebildet sind.

15. Wechselrahmen nach den Ansprüchen 1 bis 14, wobei die Deckelplatten (19, 20) mittels eines Stellantriebes (29) ausschwenkbar und verschliessbar sind.

16. Wechselrahmen nach Anspruch 15, wobei, der Stellantrieb (29) als hydraulischer Stellmotor ausgebildet ist.

17. Wechselrahmen nach Anspruch 15, wobei, der Stellantrieb (29) als Stellgetriebe (30) ausgebildet ist, das aus einer mittels einer Handkurbel (31) od.dgl. betätigbaren Gewindeschnecke (32) besteht, die mit auf den Schwenkachsen (35, 36) der Deckelplatten (19, 20) angeordneten Zahnrädern (37, 38) in Wirkeingriff ist.

18. Wechselrahmen nach den Ansprüchen 1 bis 17, wobei der Deckel (21) bei geschlossenen Deckelplatten (19, 20) als Lagerfläche ausgebildet ist.

19. Wechselrahmen nach den Ansprüchen 1 bis 5, wobei die feststehende Deckelplatte (22) zwischen den beiden Tragholmen (120, 121) des Rahmens (10) als aufklappbare Deckelplatte ausgebildet ist, die an einem der beiden Tragholme (120; 121) scharnierartig befestigt ist.

20. Wechselrahmen nach den Ansprüchen 1 bis 5 und 19, wobei der Tragholm (120; 121) oder beide Tragholme (120, 121) des Rahmens (10) als bis zur bodenseitigen Abdeckung (13; 113) geführte Trennwand ausgebildet ist.

21. Wechselrahmen nach den Ansprüchen 1 bis 5, 19 und 20, wobei der Rahmen (10) vermittels einer mittig quer zur Rahmenlängsrichtung verlaufenden Trennwand (125) in mindestens zwei Kammern (131, 134; 130 bis 135) unterteilt ist, von denen jede Kammer mit mindestens einer Deckelplatte abdeckbar ist.

22. Wechselrahmen nach den Ansprüchen 1 bis 5, 19 bis 21, wobei der Rahmen (10) im Bereich der die Bordwände aufnehmenden Kammer (130, 312 bzw. 131) offen ausgebildet ist und Bordwandabstützflächen (45) aufweist.

23. Wechselrahmen nach Anspruch 22, wobei der Rahmen (10) im Bereich der bodenseitig offen ausgebildeten Kammern (130, 132; 131) mittels einer Schutzplane od.dgl. abgedeckt ist.

24. Wechselrahmen nach Anspruch 1 bis 5, 19 bis 23, wobei der Rahmen (10) im Bereich seiner Kammern (133, 134, 135) offen ausgebildet und mittels eines abnehmbaren Gitterrostes, einer oder mehrerer abnehmbarer Platten od.dgl. abgedeckt ist.

25. Wechselrahmen nach den Ansprüchen 1 bis 5, 19 bis 24, wobei eine der beiden Querwände (12; 112) oder beide Querwände (12, 112) des Rahmens (10) abnehmbar ausgebildet sind.

26. Wechselrahmen nach den Ansprüchen 1 bis 5, 19 bis 25, wobei eine der beiden Querwände (12; 112) oder beide Querwände (12, 112) des Rahmens (10) mit verschliessbaren Durchbrechungen versehen sind.

27. Wechselrahmen nach den Ansprüchen 1 bis 5, 19 bis 26, wobei die Seiten- und/oder Querwände (11, 111; 12, 112) des Rahmens (10) mit fensterartigen Durchbrechungen versehen sind.

28. Wechselrahmen nach Anspruch 27, wobei die fensterartigen Durchbrechungen in den Seiten- und/oder Querwänden (11, 111; 12, 112) des Rahmens (10) mittels Abdeckgläsern oder Verschlussplatten verschliessbar ausgebildet sind.

## Revendications

1. Cadre de changement pour véhicules de transport de conteneurs (2, 202) connus en soi, ayant des installations de verrouillage, comme camions, remorques ou wagons porte-conteneurs, dont le cadre de changement (1; 101; 201) est reliable avec le véhicule de transport de conteneurs d'une part et avec le conteneur (4) d'autre part, et exécuté en tant que cadre (10) ouvert des deux côtés, muni de parois latérales et transversales (11, 111; 12, 112) en forme de panneaux, d'un recouvrement (13) du côté fond s'étendant partiellement ou entièrement sur la surface du cadre et réalisé entièrement ou partiellement en tant que fond solide, fond en grille (113) ou bâche en tant qu'armatures (16, 17, 18) à ses faces supérieures et inférieures (14, 15) aptes à être positionnées en prise avec les installations de verrouillage, ledit cadre étant également muni d'un recouvrement également muni d'un recouvrement supérieur (21) qui se compose d'au moins deux panneaux de recouvrement (19, 20) indéformables qui sont tenus au cadre (10) ou aux traverses porteuses (120, 121) attachées à ce dernier à la manière d'une charnière et réalisés de façon arrêtable en position repliée et verticale.

2. Cadre de changement suivant la revendication 1, dont le cadre (10) est muni d'une traverse porteuse (120) centrale suivant le sens longitudinal du cadre et attachée par ses deux bouts à la zone supérieure des parois transversales (12, 112) du cadre et qui porte à ses deux arêtes longitudinales un panneau de recouvremnent (19, 20) repliable.

3. Cadre de changement suivant la revendication 1, dont le cadre (10) est muni d'une traverse porteuse (120) centrale suivant le sens longitudinal du cadre et attachée par ses deux bouts à la zone supérieure des parois transversales (12, 112) du cadre et dont les deux parois des grands côtés (1, 111) portent respectivement un panneau de recouvrement (19, 20) repliable à la manière d'une charnière.

4. Cadre de changement suivant la revendication 1, dont le cadre (10) est muni de deux traverses (120, 121) porteuses suivant un sens parallèle l'une par rapport à l'autre et par rapport aux parois des grands côtés du cadre (11, 111), traverses (120, 121) qui sont attachées par leurs bouts à la zone supérieure des parois transversales du cadre (12, 112) de façon que les deux traverses porteuses (120, 121) sont reliées l'une à l'autre par un panneau de recouvrement fixe (22) et que chaque traverse porteuse (120, 121) porte un panneau de recouvrement (19, 20) repliable à son arête longitudinale opposée à la paroi du grand côté du cadre (11; 111).

5. Cadre de changement suivant la revendication 1, dont le cadre (10) est muni de deux traverses porteuses (120, 121) suivant le sens longitudinal du cadre et parallèles l'une par rapport à l'autre et par rapport aux parois des grands côtés du cadre (11, 111) et étant fixées par leurs bouts à la zone supérieure des parois transversales du cadre (12, 112) de manière que les deux traverses porteuses (120, 121) sont reliées par un panneau de recouvrement fixe (22), et en ce que les deux parois des grands côtés (11, 111) du cadre (10) portent respectivement un panneau de recouvrement (19, 20).

6. Cadre de changement suivant la revendication 1 pour wagons porte-conteneurs, qui est muni d'installations de verrouillage, le cadre de changement (201)

a) étant montable sur la plate-forme porteuse (205) du véhicule porteur (202) et attachable à la plate-forme porteuse (205) par l'intermédiaire des installations de verrouillage,

b) étant muni d'autres installations de verrouillage sur son côté supérieur pour la fixation d'un conteneur (204) monté sur le cadre de changement (201),

c) étant exécuté à la manière d'un conteneur ayant des parois latérales et de face (11, 12) en forme de panneau, et

d) étant muni d'un recouvrement du côté fond (13) en panneau indéformable, en fond en grille ou similaire (23), et d'un élément de recouvrement (21) comprenant au moins deux panneaux de recouvrement stables (19, 20) articulés au cadre (10) formé par les parois latérales et de face (11, 12) et repliable et arrêtable en position repliée, tout en prévoyant des installations de fixation (24) aux parois latérales (11) et/ou aux panneaux de recouvrement (19, 20) pour la construction de la bâche.

7. Cadre de changement suivant la revendication 1, exécuté en tant que plate-forme de chargement (305) du véhicule de transport (302) et en forme de cadre (310) avec des parois latérales et de face en forme de panneaux (311, 312) et muni d'un recouvrement (313) du côté fond consistant en un panneau indéformable, en fond en grille ou similaire (323), et d'une section de recouvrement (321) qui comprend au moins deux panneaux de recouvrement indéformables (319, 320) qui sont articulés au cadre (31) formé par les parois latérales et de face (311, 312) et qui sont repliables et exécutés de façon arrêtable en position repliée, et dont les parois latérales (311) et/ou les panneaux de recouvrement (319, 320) sont munis d'installations porteuses (324) pour la construction de la bâche.

8. Cadre de changement suivant les revendications 1 à 7, dont les parois latérales (11) et/ou les panneaux de recouvrement (19, 20) sont munis d'installations porteuses (24) pour la construction de la bâche.

9. Cadre de changement suivant la revendication 8, dont les installations porteuses (24) sont disposées à la surface intérieure (39) des parois latérales (11) et/ou du panneau de recouvrement (19, 20).

10. Cadre de changement suivant la revendication 9, dont les installations porteuses (24) sont disposées aux surfaces extérieures (40) des parois latérales (11) et/ou des panneaux de recouvrement (19, 20).

11. Cadre de changement suivant l'une des revendications précédentes 1 à 10, dont le recouvrement du côté fond (13) comprend un grillage (23).

12. Cadre de changement suivant l'une des revendications précédentes 1 à 11, dont le grillage (23) est renforcé par l'intermédiaire de supports (25) disposés entre les parois latérales (11) et/ou les parois transversales (12).

13. Cadre de changement suivant les revendications 1 à 12, dont les parois latérales (11) sont munies de creux (26, 27) du côté fond avec des surfaces d'appui appuyables sur les dispositifs de support des chariots élévateurs à fourche ou similaires.

14. Cadre de changement suivant les revendications 1 à 13, dont les panneaux de recouvrement (19, 20) et/ou les parois transversales (12) sont munis d'installations de fermeture (28) par plombage.

15. Cadre de changement suivant les revendications 1 à 14, dont les panneaux de recouvrement (19, 20) sont orientables et ferment par l'intermédiaire d'un organe motorisé (29).

16. Cadre de changement suivant la revendication 15, dont l'organe motorisé (29) est réalisé en forme de servomoteur hydraulique.

17. Cadre de changement suivant la revendication 15, dont l'organe motorisé (29) est réalisé en tant qu'engrenage de commande (30) comprenant une vis filetée (32) manœuvrable par l'intermédiaire d'une manivelle ou similaire (31), vis filetée (32) étant en prise avec des roues d'engrenage (37, 38) disposées sur les axes d'orientation (35, 36) du panneau de recouvrement (19, 20).

18. Cadre de changement suivant les revendications 1 à 17, dont le recouvrement est exécuté en tant que surface d'appui en ayant les panneaux de recouvrement fermés (19, 20).

19. Cadre de changement suivant les revendications 1 à 5, dont le panneau de recouvrement fixe (22) entre les deux traverses porteuses (120, 121) du cadre (10) est réalisé en tant que panneau de recouvrement repliable qui est monté à la manière d'une charnière à l'une des deux traverses porteuses (120; 121).

20. Cadre de changement suivant les revendications 1 à 5 et 19, dont la traverse porteuse (120; 121), ou les deux traverses porteuses (120, 121), du cadre (10) est réalisée en tant que paroi de séparation menée jusqu'au recouvrement du côté fond (13; 113).

21. Cadre de changement suivant les revendications 1 à 5, 19 et 20, dont le cadre (10) est divisé en deux chambres (131, 134; 130 à 135) au moins par l'intermédiaire d'une paroi de séparation (125) suivant centralement et en travers le sens longitudinal du cadre, chambres dont chacune est recouvrable par l'intermédiaire d'un panneau de recouvrement au moins.

22. Cadre de changement suivant les revendications 1 à 5, 19 à 21, par lequel le cadre (10) dans la zone de la chambre (130, 312 resp. 131) cueillant les ridelles est réalisé de façon ouverte et exécuté avec des surfaces d'appui pour la ridelle (45).

23. Cadre de changement suivant la revendication 22, dont le cadre (10), aux chambres exécutées de façon ouverte du côté fond (130, 132, 131), est recouvert à l'aide d'une bâche de protection ou similaire.

24. Cadre de changement suivant les revendications 1 à 5, 19 à 23, dont le cadre (10), aux chambres (133, 134, 135), est réalisé de façon ouverte et est recouvert par l'intermédiaire d'un grillage enlevable, d'un ou de plusieurs panneaux enlevables ou similaires.

25. Cadre de changement suivant les revendications 1 à 5, 19 à 24, dont l'une des deux parois transversales (12; 112) ou les deux parois transversales (12, 112) du cadre (10) sont réalisées de façon enlevable.

26. Cadre de changement suivant les revendications 1 à 5, 19 à 25, dont l'une des deux parois transversales (12; 112) ou les deux parois transversales (12, 112) du cadre (10) sont munies de découpures fermantes.

27. Cadre de changement suivant les revendications 1 à 5, 19 à 26, dont les parois latérales et/ou transversales (11, 111; 12, 112) du cadre (10) sont munies de découpures en forme de fenêtres.

28. Cadre de changement suivant la revendication 27, dont les découpures en forme de fenêtres dans les parois latérales et/ou transversales (11, 111; 12, 112) du cadre (10) sont réalisées de façon fermante à l'aide de couvercles vitrés ou de panneaux de fermeture.

**Claims**

1. Changing frame for *per se* known container transport vehicles (2, 202) having container locking devices, such as lorries, trailers or track-bound container-carrying cars or wagons, wherein the changing frame (1; 101; 201) can be connected to the container transport vehicle on the one hand and to the container (4) on the other hand and is constructed as a frame member (10) which is open on both sides and which comprises plate-like side and end walls (11, 111; 12, 112), a bottom cover (13) extending wholly or partly over the entire frame surface and which is entirely or zonally constructed as a solid base, as a lattice base (113) or as a tarpaulin, fitting (16, 17, 18) which can be brought into working engagement with container locking devices on its top and bottom (14, 15) and an upper cover (21), which comprises at least two dimensionally stable cover plates (19, 20), which are held in hinge-like manner on the frame member (10) or on support beams (120, 121) fixed thereto and which are fixed in the swung-up, vertical position.

2. Changing frame according to claim 1, wherein the frame member (10) centrally has a support beam (120) running in the longitudinal direction of the frame and fixed by its two ends in the upper area of the frame end walls (12, 112) and carrying on its two longitudinal edges a cover plate (19, 20) which can be swung up.

3. Changing frame according to claim 1, wherein the frame (10) centrally has a support beam (120) running in the longitudinal direction of the frame and fixed by its two ends in the upper area of the frame end walls (12, 112), a cover plate (19, 20), which can be swung up, being held in hinge-like manner on its two longitudinal side walls (1, 111).

4. Changing frame according to claim 1, wherein the frame member (10) has two support beams (120, 121) running in the longitudinal direction, which are parallel to one another and to the frame longitudinal side walls (11, 111), the ends of said beam being fixed in the upper area of the frame end walls (12, 112), the two support beams (120, 121) being connected by means of a fixed cover plate (22), and wherein each support beam (120, 121) has on its longitudinal edge facing the frame longitudinal side wall (11; 111) a cover plate (19, 20) which can be swung up.

5. Changing frame according to claim 1, wherein the frame member (10) has two support beams (120, 121) running in the longitudinal direction of the frame, which are parallel to one another and to the frame longitudinal side walls (11, 111), the ends of said beams being fixed in the upper area of the frame end walls (12, 112), the two support beams (120, 121) being connected by means of a fixed cover plate (22) and on its two longitudinal side walls (11, 111), and wherein the frame member (10) carries in each case a cover plate (19, 20) which can be swung up.

6. Changing frame according to claim 1 for track-bound container-carrying cars or wagons which are provided with container locking devices, wherein the changing frame (211)

a) can be placed on the support platform (204) of the car (202) and can be fixed by means of container locking devices to the support platform (205),

b) is provided at the top with further container locking devices for fixing a container (204) mounted on the changing frame (201),

c) is constructed in tank-like manner with plate-like side and end walls (11, 12), and

d) has a bottom cover (13) formed from a rigid plate, a lattice-like grating or the like (23) and a cover part (21) which comprises at least two dimensionally stable cover plates (19, 20) which are articulated to the frame member (10) formed by the side and end walls (11, 12) and are constructed so as to be swung up and lockable in the swung-up position, retaining means (24) for a tarpaulin structure being provided on the side walls (11) and/or cover plates (19, 20).

7. Changing frame according to claim 1, wherein the changing frame is constructed as a loading platform (305) of the transport vehicle (302) and is provided in frame-like (310) manner with plate-like side and end walls (311, 312), has a bottom-side cover (313) formed from a rigid plate, a lattice-like grating or the like (323) and a cover part (321) which comprises at least two dimensionally stable cover plates (319, 320) which are articulated to the frame member (310) formed by the side and end walls (311 and 312) and which can be swung up and locked in the swung-up position, whilst retaining means (324) for a tarpaulin structure are provided on the side walls (311) and/or cover plates (319, 320).

8. Changing frame according to claims 1 to 7, wherein retaining means (24) for a tarpaulin structure are formed on the side walls (11) and/or cover plates (19, 20).

9. Changing frame according to claim 8, wherein retaining means (24) are formed on the inner surface (39) of the side walls (11) and/or the cover plates (19, 20).

10. Changing frame according to claim 9, wherein the retaining means (24) are arranged on the outer surfaces (40) of side walls (11) and/or cover plates (19, 20).

11. Changing frame according to one of the preceding claims 1 to 10, wherein the bottom-side cover (13) comprises a lattice netting (23).

12. Changing frame according to one of the preceding claims 1 to 11, wherein the lattice netting (23) is reinforced by means of supports (25) arranged between side walls (11) and/or end walls (12).

13. Changing frame according to claims 1 to 12, wherein side walls (11) have bottom recesses (26, 27) with bearing surfaces which can be supported on supporting means of fork lift trucks or the like.

14. Changing frame according to claims 1 to 13, wherein lead-sealable closing means (28) are provided on the cover plates (19, 20) and/or end walls (12).

15. Changing frame according to claims 1 to 14, wherein the cover plates (19, 20) can be swung out and closed by means of a servodrive (29).

16. Changing frame according to claim 15, wherein the servodrive (29) is constructed as a hydraulic servomotor.

17. Changing frame according to claim 15, wherein the servodrive (29) is constructed as a servogear (30), which comprises a worm (32) operable by means of a crank handle (31) or the like and which is in operative engagement with toothed wheels (37, 38) arranged on the pivot pins (35, 36) of cover plates (19, 20).

18. Changing frame according to claims 1 to 17, wherein the cover (21) is constructed as a bearing surface when cover plates (19, 20) are closed.

19. Changing frame according to claims 1 to 5, wherein the fixed cover plate (22) between the two support beams (120, 121) of frame member (10) can be swung up and said cover plate is fixed in hinge-like manner to the two beams (120; 121).

20. Changing frame according to claims 1 to 5 and 19, wherein one or both support beams (120; 121) of the frame member (10) are constructed as a partition extended to the bottom cover (13, 113).

21. Changing frame according to claims 1 to 5, 19 and 20, wherein the frame member (10) is subdivided into at least two chambers (131, 134; 130 to 125) by means of a partition running centrally and at right angles to the longitudinal direction of the frame, each chamber being coverable with at least one cover plate.

22. Changing frame according to claims 1 to 5, 19 to 21, wherein, in the vicinity of the chambers (130, 312 or 131) receiving the side and tail boards, the frame member (10) is constructed in open manner and has side and tail board support surfaces (45).

23. Changing frame according to claim 22, wherein, in the vicinity of the bottom open chambers (130, 132; 131), the frame member (10) is covered by means of a protective tarpaulin or the like.

24. Changing frame according to claims 1 to 5, 19 to 23, wherein, in the vicinity of its chambers (133, 134, 135), the frame member (10) is open and is covered by means of a removable lattice grating, one or more removable plates, etc.

25. Changing frame according to claims 1 to 5, 19 to 24, wherein one or both the end walls (12; 112) of the frame member (10) are constructed so as to be removable.

26. Changing frame according to claims 1 to 5, 19 to 25, wherein one or both end walls (12; 112) of the frame member (10) are provided with closable openings.

27. Changing frame according to claims 1 to 5, 19 to 26, wherein the side and/or end walls (11, 111; 12, 112) of the frame member (10) are provided with window-like openings.

28. Changing frame according to claim 27, wherein the window-like openings in the side and/or end walls (11, 111; 12, 112) of the frame member (10) are constructed so as to be closable by means of covering glasses or closure plates.

FIG. 1

4

2

6

1

5

FIG. 2

1

21

28

20

10

29

19

11

17

27

18

26

22

12

13

16

FIG. 3

21

14

12

12

23

25

13

15

13

FIG. 4

FIG. 5

FIG.6

FIG. 7

0 069 921

FIG.8

FIG.9

FIG. 10

112                                                                      12

101        10

0 069 921

FIG. 11

133    141              134   145                        142
                                                    135

112                                                      12

101        10

FIG.12

FIG.13

FIG.14

FIG.15

FIG.16

FIG.17

FIG.18

FIG.19

FIG.20

FIG.21

0 069 921

FIG.22

FIG.23